# EUROPÄISCHE PATENTSCHRIFT

(11) **EP 2 664 405 B1**
(45) Veröffentlichungstag und Bekanntmachung des Hinweises auf die Patenterteilung: **22.02.2017**
(21) Anmeldenummer: 12167853.6
(22) Anmeldetag: 14.05.2012
(51) Int. Cl.: B23K 9/32

(54) **Reinigungsstation zum Reinigen von Schweißbrennern**
Cleaning station for welding torches
Station de nettoyage destinée au nettoyage de torches de soudage

(43) Veröffentlichungstag der Anmeldung: 20.11.2013
(73) Patentinhaber: Dinse G.m.b.H., 22419 Hamburg (DE)
(72) Erfinder: Zander, Peter, 22844 Norderstedt (DE)
(74) Vertreter: Raffay & Fleck

(56) Entgegenhaltungen:
- WO-A1-2004/103632
- DD-A1- 211 505
- DE-A1- 2 943 650
- JP-A- 2003 136 245
- US-A- 5 070 568
- US-A- 5 221 826
- US-A1- 2005 211 684

## Beschreibung

Die vorliegende Erfindung betrifft eine Reinigungsstation zum Reinigen von an Schweißrobotern angeordneten Schweißbrennern, insbesondere des Inneren von Gasdüsen von Lichtbogen-Schweißbrennern. Sie betrifft ferner ein Verfahren zum Reinigen solcher Schweißbrenner.

In verschiedenen Fertigungsverfahren, bei denen Metallelemente fest miteinander zu verbinden sind, werden Schweißroboter zum Setzen von Schweißverbindungen, z.B. Punktschweißungen, eingesetzt. Dabei kommen insbesondere Lichtbogen-Schweißverfahren, hierbei im Besonderen Metallschutzgasschweißverfahren (MSG-Verfahren) zum Einsatz. Beim Metallschutzgasschweißen unterscheidet man zwischen dem sogenannten MIG-Schweißen (Metallschweißen mit innerten Gasen) und dem MAG-Schweißen (Metallschweißen mit aktiven, also reaktionsfähigen Gasen). Bei diesen Verfahren wird der abschmelzende Schweißdraht von einer Drahtfördereinheit mit veränderbarer Geschwindigkeit kontinuierlich nachgeführt.

Im Zuge der diversen Schweißvorgänge verschmutzen die Schweißbrenner, bei Lichtbogenschweißgeräten, insbesondere Metallschutzgasschweißgeräten, insbesondere der innere Bereich der bei entsprechenden Geräten angeordneten Gasdüsen. Derartige Verschmutzungen können zu Fehlfunktionen und im Ergebnis zu ungenügenden Schweißverbindungen oder aber dem Ausfall des Schweißgerätes aufgrund von über Metallspritzer abgeleiteten Schweißströmen (Kurzschlüssen) und so zu einem vollständigen Ausfall des Schweißsystems führen. Entsprechend sind die an Schweißrobotern angeordneten Schweißbrenner in regelmäßigen Abständen zu reinigen und von entsprechenden Schweißrückständen, insbesondere Spritzern des aufgeschmolzenen Metalls zu befreien und zu reinigen. Dabei ist es bekannt, zum Reinigen der Schweißbrenner, insbesondere des Inneren der Gasdüsen von Lichtbogenschweißbrennern, rotierende Drahtbürsten zu verwenden, die um eine Rotationsachse angetrieben in axialer Richtung der Rotationsachse in das vordere Ende des zu reinigenden Schweißbrenners, insbesondere in die Gasdüse eines Lichtbogenschweißbrenners, eingeführt werden und durch die Rotation der Bürstenenden anhaftende Metallspritzer von der Innenwand des Schweißbrenners, insbesondere der Gasdüse, lösen. Hierzu werden die Schweißbrenner durch eine entsprechende Anstellbewegung des Schweißroboters zu einer Reinigungsstation verfahren, an welcher die rotierenden Drahtbürsten angeordnet sind, und die rotierenden Drahtbürsten werden in die vorderen, der Schweißnaht zugewandten Enden der Schweißbrenner verfahren und üben dort die Reinigungswirkung aus.

Mit derartigen Reinigungsstationen lassen sich zwar gute Reinigungsleistungen erzielen, jedoch erfordern sie einen komplexen Aufbau und einen genauen Betrieb, um die Reinigungswirkung zu entfalten. So sind insbesondere Antriebe einerseits für die Rotation der Drahtbürsten, andererseits für deren Längsverstellung vorzusehen, und es müssen exakte Ausrichtungen zwischen dem Verlauf der Rotationsachse der Drahtbürsten und der Längsausrichtung des an dem Roboterarm angeordneten Schweißbrenners eingehalten werden. Darüber hinaus unterliegen die Drahtbürsten einem Verschleiß und müssen in Abständen ausgetauscht und ersetzt werden.

Im Stand der Technik sind weiterhin ähnliche Vorrichtungen und Verfahren bekannt, bei denen anstelle von Drahtbürsten spiralförmig gewundene Reinigungsdrähte in die vorderen Enden, insbesondere in entsprechende Gasdüsen, von Schweißbrennern eingeführt und dort motorisch angetrieben rotiert und/oder hin und her bewegt werden. Beispiele hierzu zeigen die US 5,070,568; die DD 211 505, die JP 2003136245 und die DE 2943650 A1. Auch hier ist aber das grundsätzliche Problem weiterhin gegeben, dass derartige Reinigungsstationen und -verfahren kompliziert aufgebaut sind bzw. arbeiten, da sie weiterhin einen Antrieb der Reinigungsmittel, hier spiralförmig gewundener Reinigungsdrähte, erfordern. Letztlich begründet diese weitere Erfordernis auch eine Anfälligkeit der entsprechenden Vorrichtungen und Verfahren.

Aufgabe der vorliegenden Erfindung ist es daher, eine Reinigungsstation zum Reinigen von an Schweißrobotern angeordneten Schweißbrennern, insbesondere des Inneren von Gasdüsen von Lichtbogenschweißbrennern, anzugeben, welche einen einfacheren und robusteren Aufbau hat bei gleichzeitig solider Reinigungswirkung. Ferner soll ein entsprechendes Reinigungsverfahren angegeben werden.

Diese Aufgabe wird erfindungsgemäß gelöst durch ein Verfahren zum Reinigen von an Schweißrobotern angeordneten Schweißbrennern, insbesondere des Inneren von Gasdüsen von Lichtbogenschweißbrennern, mit den Merkmalen des Schutzanspruches 1, sowie eine Reinigungsstation gemäß Anspruch 7. Vorteilhafte Weiterbildungen der Erfindung sind in den abhängigen Ansprüchen 2 bis 6 und 8 bis 10 angegeben.

Erfindungsgemäß weist eine Reinigungsstation zum Reinigen von an Schweißrobotern angeordneten Schweißbrennern, insbesondere des Inneren von Gasdüsen von Lichtbogen-Schweißbrennern, welche die oben bezeichnete Aufgabe löst, einen auf einer Basis einseitig mit einem ersten Ende festgelegt, von der Basis in Richtung eines freien Endes abstehenden, spiralförmig um eine Längsachse gewundenen Reinigungsdraht auf. Dabei ist der Außendurchmesser der aus dem Reinigungsdraht gebildeten Spirale derart bemessen, dass die Spirale mit der Seite des freien Endes des Reinigungsdrahtes zumindest über einen Abschnitt ihrer Länge in einen Schweißbrenner, insbesondere in eine Gasdüse eines Lichtbogen-Schweißbrenners eingeführt werden kann. Ein solches Einführen in einen Schweißbrenner, insbesondere in eine Gasdüse eines Lichtbogen-Schweißbrenners, erfolgt dabei von einer offenen Schweiß- bzw. Bearbeitungsseite her. Dabei ist unter einem Einführen nicht etwa zu verstehen, dass der Reinigungsdraht selbst in Richtung des Inneren der Gasdüse bewegt wird. Vielmehr wird bei der Erfindung der Schweißbrenner selbst mittels des Schweißroboters über die stillstehende Spirale des Reinigungsdrahtes geführt, so dass dabei der Reinigungsdraht mit seinem freien Ende und dem diesem zugewandten Abschnitt der Spirale in den Schweißbrenner eintritt, insbesondere in die Gasdüse eines Lichtbogen-Schweißbrenners.

Wird nun - was durch entsprechende Programmierung des Schweißroboters und seiner Mehrachsbewegungen geschehen kann - der Schweißbrenner gegenüber dem Reinigungsdraht, insbesondere in einer Querrichtung zu der Längsachse der Spirale, oder aber auch in dieser Längsrichtung hin- und herbewegt, so schlägt der Reinigungsdraht - gefördert durch die Spiralform - im Inneren an die Innenwand des Schweißbrenners, insbesondere der Gasdüse, an, wobei sich nicht nur eine längs bzw. quer zur Längsrichtung der Spirale gerichtete Bewegung, sondern aufgrund der Spiralform des Reinigungsdrahtes auch eine Bewegungskomponente in jeweils anderer Richtung zu der Längsachse der Spirale ergibt. Durch dieses mehrfache Anschlagen mit verschiedenen Richtungskomponenten werden im Inneren der Schweißdüse anhaftende Verschmutzungen, insbesondere erstarrte Metalltropfen von dem Schweißbrenner gelöst und können aus dem vorderen Ende des Schweißbrenners (dem bei der Bearbeitung der Schweißstelle zugewandten Ende) herausfallen. Auf diese Art und Weise und mit dem skizzierten Verfahren (welches für sich genommen ebenfalls einen erfinderischen Gehalt hat), kann in sehr schneller Zeit und mit sehr einfachen Mitteln ein verschmutzter Schweißbrenner für einen weiteren Einsatz gereinigt werden. Die Reinigungsstation ist dabei mit einfachsten Mitteln und sehr robust aufgebaut. Insbesondere unterliegt der Reinigungsdraht kaum einem Verschleiß und hat eine bedeutend längere Standzeit als die bekannten Drahtbürsten. Wesentlich bei der erfindungsgemäßen Reinigungsstation ist, dass der Reinigungsdraht nur einseitig mit einem ersten Ende an der Basis festgelegt ist, ansonsten keine weitere Befestigung aufweist. Darüber hinaus ist wesentlich die Spiralform, in die der Reinigungsdraht gewunden ist, da diese das oben beschriebene, wiederholte Anschlagen des Reinigungsdrahtes an der Wandung der Innenseite des Schweißbrenners, insbesondere der Gasdüse eines Lichtbogen-Schweißbrenners, hervorruft und begünstigt.

Es ist erfindungsgemäß allein eine Hin- und Herbewegung des Schweißbrenners durch den Roboterarm die die Reinigungswirkung mit dem Reinigungsdraht nicht bewirkt. Mit anderen Worten ist die Gestaltung der Reinigungsstation eine rein passive, also ohne einen eigenen Aktuatorantrieb zum Hin- und Herbewegen des zu der Spirale gewundenen Reinigungsdrahtes längs und/ oder quer zu dessen Längsachse.

Mit Vorteil verläuft bei der erfindungsgemäßen Reinigungsstation die Längsachse der Spirale des Reinigungsdrahtes im Wesentlichen vertikal. Diese Orientierung bietet den Vorteil, dass der Schweißbrenner mit einer nach unten weisenden, im Schweißeinsatz der Schweißstelle zugewandten Austrittsöffnung über den in Spiralform gewundenen Reinigungsdraht geführt wird, so dass gelöste Verschmutzungen aufgrund der Schwerkraftwirkung aus dieser Öffnung austreten und aus dem Schweißbrenner einfach herausfallen.

Um aus dem Schweißbrenner gelöste Reinigungsrückstände, insbesondere erstarrte Metalltropfen in der Reinigungsstation aufzufangen und zu sammeln, ist es von Vorteil, wenn ein unterhalb der Basis und unterhalb der Spirale angeordnetes Auffangbehältnis zum Auffangen derartige Reinigungsrückstände vorgesehen ist.

Mit Vorteil ist der Reinigungsdraht aus Federstahl gebildet. Ein in Spiralform gewundener Reinigungsdraht aus Federstahl gibt eine besondere Elastizität und unterstützt die hin und her schlagende Reinigungswirkung des Reinigungsdrahtes, wenn die Spirale durch entsprechende Bewegung des Schweißbrenners, wie sie durch den Schweißroboter ausgelöst ist, in Schwingungen versetzt wird. Dies befördert die Reinigungswirkung in besonders gutem Maße.

Mit besonderem Vorteil ist der Reinigungsdraht in einer zylinderförmigen Spirale gewunden, im Besonderen nach Art einer Schraubenfeder. Eine solche zylinderförmige Spirale hat den Vorteil, dass sie mit großer Länge in eine gegebene Austrittsöffnung eines Schweißbrenners, insbesondere einer Gasdüse eines Lichtbogenschweißbrenners, eingeführt werden und dort wirken kann. Auch kann diese Spirale so bemessen sein, dass in ihrem Inneren eine Kontaktspitze eines Schweißbrenners (insbesondere Lichtbogen-Schweißbrenners) in axialer Richtung eingeführt und aufgenommen werden kann, so dass auch diese Komponente mit dem Reinigungsdraht von auf deren Außenseite anhaftenden Verschmutzungen befreit werden kann. Soll die erfindungsgemäße Reinigungsstation jedoch im Zusammenspiel mit Schweißbrennern unterschiedlichen Durchmessern der Austrittsöffnungen verwendet werden, so können auch andere Formen der Spirale des Reinigungsdrahtes erwogen werden, z.B. konisch sich zum feien Ende hin verjüngend zulaufende.

Eine weitere Unterstützung der Reinigungswirkung kann erzielt werden, indem in der Reinigungsstation eine Druckgasleitung vorgesehen ist mit einer Auslassdüse im Bereich des Reinigungsdrahtes, durch welche ein Druckgasfluss in eine Richtung mit wenigstens einer in Richtung des freien Endes der Spirale weisenden Richtungskomponente abgegeben werden kann. Mit einer solchen Druckgasquelle kann während oder am Ende einer Reinigungsprozedur das Innere des Schweißbrenners ausgeblasen und von feinen Rückständen befreit werden.

Die erfindungsgemäße Reinigungsvorrichtung umfasst mit Vorteil einen Ständer, der mit einem unteren Abschnitt auf einem Untergrund ruht und an dem in einem oberen Abschnitt die Basis mit dem daran festgelegten Reinigungsdraht angeordnet ist. Ein solcher Ständer erlaubt die Anordnung des Reinigungsdrahtes in einer passenden Arbeitshöhe, die einerseits durch den Schweißroboter und den daran angeordneten Schweißbrenner einfach angefahren werden kann, andererseits für eine Bedien- bzw. Wartungsperson einfach zu erreichen ist.

Die erfindungsgemäße Reinigungsvorrichtung kann neben dem Reinigungsdraht weitere Elemente aufweisen. Dies kann insbesondere eine Schneidvorrichtung zum Stutzen eines freien Endes eines in dem Schweißbrenner geführten Schweißdrahtes sein, die insbesondere ebenfalls an dem Ständer festgelegt sein kann. Für ein präzises Schweißergebnis ist es insbesondere beim Metallschutzgasschweißen wichtig, dass der Schweißbrenner mit einer definierten Länge des frei vorstehenden Abschnittes des Schweißdrahtes zu der anzufahrenden Schweißstelle geführt wird. Die Länge des Schweißdrahtes wird typischerweise über die Drahtvorschubeinrichtung gemessen und nachgehalten. Diese ist jedoch durch Schlupf- und sonstige Toleranzen nicht immer genau, wobei sich die Genauigkeit insbesondere nach einem längeren Schweißvorgang verringert. Darüber hinaus kann durch die Reinigung ein Umbiegen des Schweißdrahtendes oder eine sonstige Veränderung am Schweißdraht erfolgen, so dass ein akkurates Zuschneiden der Schweißdrahtspitze auch aus diesem Grund nach einem Reinigungsprozess von Vorteil ist. Mit der erfindungsgemäßen Schneidvorrichtung kann durch positionsgenaues Zustellen des Roboters ein Stutzen des freien Endes des Schweißdrahtes mit sehr präziser, zurückbleibender Länge des im Schweißbrenner angeordneten freien Endes des Schweißdrahtes erfolgen.

Eine weitere und zusätzliche Funktionalität der Reinigungsvorrichtung kann erhalten werden durch ein im Wesentlichen horizontal angeordnetes, aus einem elektrisch leitenden Material bestehendes Richtblech, welches zwei senkrecht zueinander ausgerichtete Kontaktkanten aufweist, gegen die der Schweißdraht eines Schweißbrenners geführt werden kann. Dieses Richtblech kann insbesondere an dem Ständer angeordnet sein, wenn die Reinigungsstation einen solchen aufweist. Um nach einem Reinigungsvorgang und dem Stutzen des freien Endes des Schweißdrahtes die korrekte Lage des sogenannten Tool Center Point (TCP), also des Richtpunktes für die Ausrichtung des Werkzeuges, der durch die Lage des freien Endes des Schweißdrahtes vorgegeben ist, zu überprüfen bzw. diesen ggf. neu einzujustieren, ist das Richtblech vorgesehen. Dabei wird der Schweißbrenner mit dem Schweißroboter nacheinander an die beiden im rechten Winkel zueinander angeordneten Kontaktkanten gefahren, wobei durch einen eintretenden Stromfluss des mit elektrischer Versorgung beaufschlagten Schweißdrahtes bei Kontakt mit der Kontaktkante des elektrisch leitenden Richtbleches dem System die Berührung aufgezeigt wird. Dadurch, dass das Richtblech in seiner Lage im Raum fest angeordnet und in seinen Lage-Koordinaten dem Schweißrobotersystem bekannt ist, kann der Schweißroboter basierend auf seinen Verfahrdaten die Lage des TCP bestimmen, mit seinem System abgleichen und diese Daten ggf. korrigieren.

Selbstverständlich ist eine Reinigungsstation nicht allein auf einen einzigen dort angeordneten Reinigungsdraht beschränkt, so können beispielsweise Tandem- oder Zwillingsstationen mit zwei Reinigungsdrähten für die gleichzeitige Nutzung durch und Reinigung von zwei Schweißbrennern oder auch solche Stationen mit mehr als zwei von entsprechenden Anzahlen von Schweißbrennern anfahrbaren Reinigungsdrähten gebildet sein.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: in einer perspektivischen Darstellung die Ansicht eines Ausführungsbeispiels einer erfindungsgemäßen Reinigungsstation;
- Fig. 2: eine Frontalansicht der Reinigungsstation gemäß Fig. 1;
- Fig. 3: eine entlang der Schnittlinie A-A in Fig. 2 genommene Schnittansicht;
- Fig. 4: in vergrößerter Darstellung den in Fig. 3 mit IV bezeichneten Detailausschnitt;
- Fig. 5: eine Draufsicht von oben auf das Ausführungsbeispiel der Reinigungsstation gemäß den vorhergehenden Figuren;
- Fig. 6: eine der Fig. 3 vergleichbare Schnittansicht des Ausführungsbeispiels mit mit einer Öffnung an der Schweißseite über den Reinigungsdraht geführtem Schweißbrenner und
- Fig. 7: in vergrößerter Darstellung den in Fig. 6 mit VII bezeichneten Ausschnitt.

In den Figuren ist zur Erläuterung ein Ausführungsbeispiel einer erfindungsgemäßen Reinigungsstation dargestellt. Dieses Ausführungsbeispiel wird nachfolgend unter Rückgriff auf diese Figuren beschrieben. Dabei ist hier festzuhalten, dass die Figuren keineswegs vollständige Konstruktionsdarstellungen darstellen und auch nicht zwangsläufig maßstabsgerecht dargestellt sind. Sie dienen vielmehr der prinzipiellen Darstellung und Erläuterung des Aufbaus und der Funktionsweise der Reinigungsstation in einem beispielhaften Ausführungsbeispiel, stellen insoweit auch nicht etwa eine abschließende Darstellung sämtlicher Gestaltungsvarianten dar, die im Rahmen der Erfindung denkbar und möglich sind. Gleiche Elemente sind in den Figuren mit gleichen Bezugsziffern versehen.

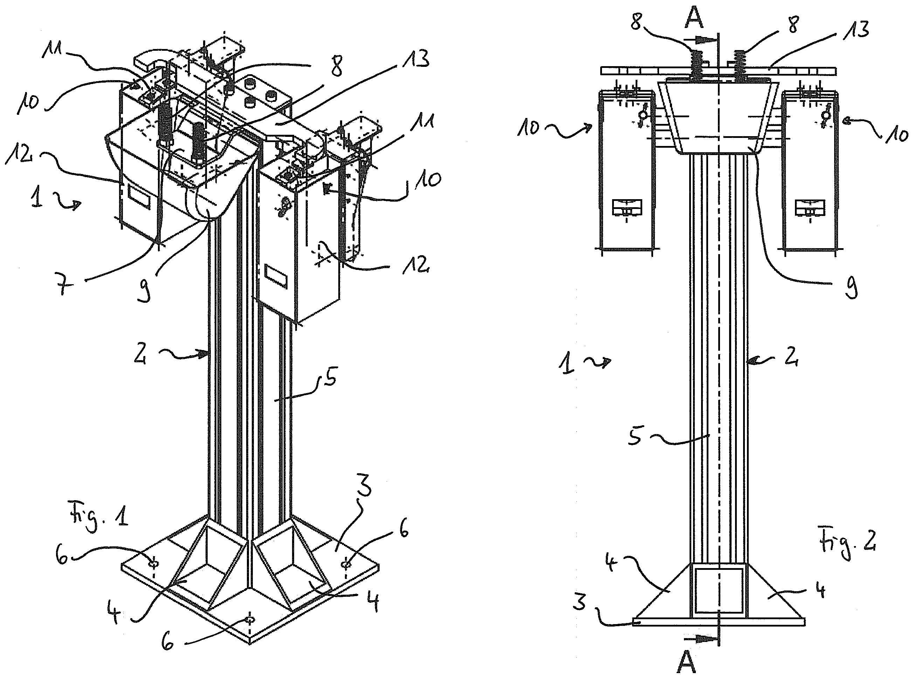

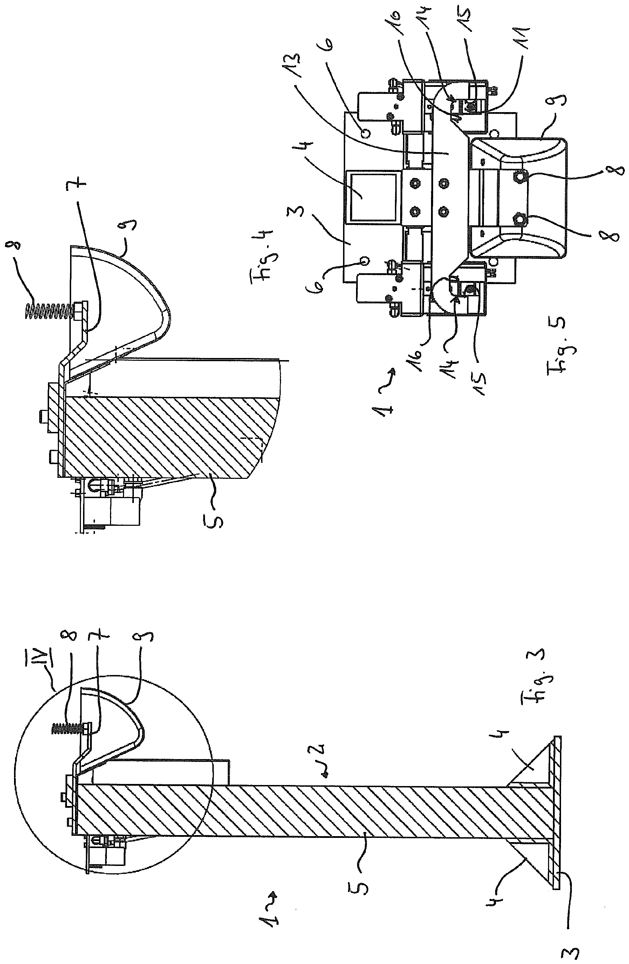

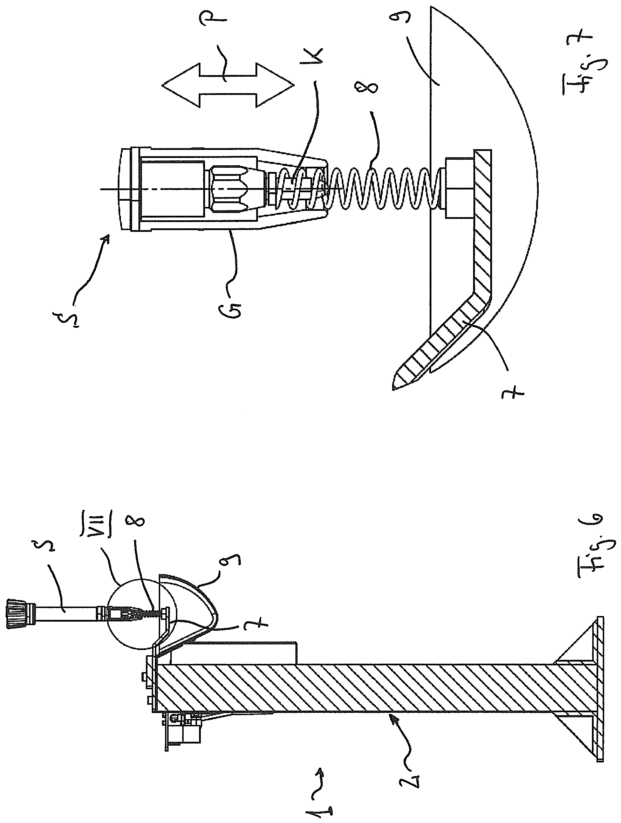

Eine erfindungsgemäße Reinigungsstation ist in den Figuren allgemein mit 1 bezeichnet. Sie wird im Folgenden in ihrem Aufbau unter vorrangiger Bezugnahme auf die Figuren 1 bis 5 beschrieben. Hinsichtlich der Funktion der Reinigungsstation wird auf die Darstellungen der Figuren 6 und 7 verwiesen, die wesentlichen Elemente der Reinigungsstation 1 ebenfalls noch einmal erkennen lassen. Die Reinigungsstation 1 umfasst einen säulenartigen Ständer 2, der eine auf einer Bodenplatte 3 aufgesetzte, dort mit Winkelstücken 4 fixierte Vertikalstrebe 5 umfasst. Die Bodenplatte 3 ist von Befestigungsbohrungen 6 durchbrochen, durch welche die Bodenplatte 3 mittels geeigneter Befestigungsschrauben, - anker oder dgl. an einem Untergrund positionsgetreu festgelegt werden kann.

Am oberen Ende der Vertikalstrebe 5 sind die eigentlichen funktionellen Komponenten der Reinigungsstation 1 angeordnet. Dabei ist die hier gezeigte Reinigungsstation 1 eine Tandem-Station, die - hier in einem spiegelbildlich zueinander gelegenen Aufbau - jede Funktionskomponente zweimal trägt für die zeitgleiche Nutzung von zwei Schweißrobotern zum Reinigen der jeweils an diesen angeordneten Schweißbrennern.

Hauptbestandteil der Funktionskomponenten der Reinigungsstation sind zwei auf einer hier gemeinsamen Basis 7, die die Form eines doppelt abgewinkelten Bleches aufweist, angeordnete in Spiralform gewundene Reinigungsdrähte 8. Die Reinigungsdrähte 8 sind jeweils mit einem ersten Ende an der Basis 7 angeordnet und zu einer zylinderförmigen schraubenfederartigen Spirale gewunden, welche sich mit ihrer Längsrichtung in im Wesentlichen vertikaler Richtung frei abstehend von der Basis 7 erstrecken, ohne weitere Festlegungspunkte. Die Reinigungsdrähte 8 sind aus Federstahl, so dass sie in der zu den Spiralen gewundenen Form jeweils typische Schraubenfedern zylindrischer Form bilden.

Unterhalb der Basis 7 und der Reinigungsdrähte 8 ist ein trogartiges Auffangbehältnis 9 angeordnet, in welches bei der Reinigung in nachfolgend noch näher beschriebener Weise aus einem Schweißbrenner gelöste Verschmutzungen, insbesondere erstarrte Metalltropfen fallen und dort aufgefangen und gesammelt werden.

Rechts und links des Auffangbehältnisses 9 befinden sich Schneidvorrichtungen 10 zum Stutzen eines freien Endes eines in dem Schweißbrenner geführten Schweißdrahtes. Darin werden mit klauenartigen Schneidbacken, die hier mit 11 schematisch angedeutet sind und ähnlich wie Schneidzangen zum Kappen eines Drahtendes arbeiten, überstehende Anteile des Schweißdrahtes abgeschnitten, wobei die abgeschnittenen Enden in unterhalb der Schneidbacken 11 angeordnete Auffangbehälter 12 fallen und dort gesammelt werden.

Weiterhin zu erkennen ist ein insgesamt jochartig geformtes Richtblech 13, welches am oberen Ende der Vertikalstrebe 5 des Ständers 2 angeordnet ist und sich zu beiden Seiten des Auffangbehältnisses 9 erstreckt. Auf jeder der Seiten des Auffangbehältnisses 9 weist das Richtblech 13, welches aus einem elektrisch leitenden Material gebildet ist, Aussparungen 14 auf, mit jeweils 2 zueinander senkrecht stehenden Kontaktkanten 15 und 16. Diese Kanten dienen zur Abstimmung des sogenannten Tool Center Point (TCP), indem der Roboter nacheinander beide Kanten 15 und 16 mit dem Ende des Strom leitenden Schweißdrahtes anfährt, wobei bei Kontakt des Schweißdrahtes mit dem leitenden Material des Richtbleches an den Kontaktkanten 15 bzw. 16 eine Veränderung des Stromflusses auftritt, die von der Steuerung des Roboters als Kontakt mit der hinsichtlich der jeweiligen Lage in x- bzw. y-Richtung eines gedachten Koordinatensystems der Computersteuerung bekannten Kontaktkanten 15 bzw. 16 interpretiert und daraus die Lage des TCP bestimmt, mit dem abgespeicherten Wert vergleicht und ggf. die gespeicherten Koordinatendaten für diesen Punkt korrigiert.

Dieser Schritt ist typischerweise der letzte in einem Reinigungsvorgang. Zuvor fährt der Schweißroboter mit dem Schweißbrenner über den spiralartig zu einer Schraubenfeder gewundenen, aus Federstahl bestehenden Reinigungsdraht 8, senkt den Schweißbrenner S in eine solche Position ab, wie sie in Fig. 6 gezeigt und in Fig. 7 vergrößert im Ausschnitt dargestellt ist, so dass der Reinigungsdraht 8 mit dem freien Ende der Spirale in den Schweißbrenner S, insbesondere in die Gasdüse G des hier als Lichtbogen-Schweißbrenner, insbesondere für das MIG- bzw. MAG-Schweißen ausgeführten Schweißbrenners S hinein ragt. Dabei ist die Abmessung der Spirale des Reinigungsdrahtes 8 hier so, dass in deren in Längsrichtung sich axial erstreckendes und zwischen den Windungen des Reinigungsdrahtes 8 liegenden Raum die Kontaktspitze K des Schweißbrenner S passt und dort aufgenommen wird. Aus dieser Ausgangsstellung heraus führt der Schweißroboter mit dem Schweißbrenner S dann schnelle Hin- und Herbewegungen in oder quer zur Längsrichtung der Spirale des Reinigungsdrahtes 8 aus (hier als in deren Längsrichtung verlaufende Bewegung durch den Pfeil P angedeutet), so dass der Reinigungsdraht 8 wiederholt und in unterschiedlichen Richtungen an die Innenwand des Innenbereiches des Schweißbrenners S, hier insbesondere seiner Gasdüse G, und auch an die Außenseite der Kontaktspitze K anstößt und auf diese Weise dort anhaftende Verschmutzungen, insbesondere erstarrte Metalltropfen, ablöst, die dann aufgrund der Schwerkraft nach unten herausfallen und in dem trogartigen Auffangbehältnis 9 gesammelt werden.

Die mit dieser Vorgehensweise erzielte Reinigungswirkung ist bereits nach kurzer Zeit und wiederholten Hin- und Herbewegungen des Schweißroboters ausreichend, so dass der Schweißroboter den Schweißbrenner S dann zu der ihm zugeordneten Schneidvorrichtung 10 (der dem zugeordneten Reinigungsdraht 8 näher gelegenen Schneidvorrichtung 10) verfahren und den Schweißdraht längengenau kappen bzw. stutzen kann. Hierzu wird der Schweißroboter den Schweißbrenner S auf eine vorgegebene Höhe so positionieren, dass der Schweißdraht zwischen den Schneidbacken 11 liegt, woraufhin eine Zustellbewegung der Schneidbacken 11 ausgelöst und der Schweißdraht gekappt wird. Zuvor oder im Anschluss daran kann dann die wie oben beschriebene Bestimmung und Kontrolle des TCP stattfinden. Anschließend ist der Schweißroboter mit gereinigtem Schweißbrenner S für weitere Schweißvorgänge einsatzbereit.

Das hier gezeigte Ausführungsbeispiel einer Reinigungsstation 1 ist hinsichtlich der Reinigungswirkung rein passiv, d.h. die mechanische Reinigungswirkung zwischen dem Schweißbrenner S (insbesondere dem Inneren einer Gasdüse G eines Lichtbogen-Schweißbrenners) und dem Reinigungsdraht 8 wird allein aufgrund der Bewegung des Schweißbrenners S, die durch den Schweißroboter initiiert ist, erzielt. Denkbar ist hierbei auch (hier nicht eingezeichnet) die zusätzliche Ausstattung der Reinigungsvorrichtung mit einer Druckgasquelle, z.B. einer Druckluftquelle, zum während der Reinigung oder im Anschluss daran betriebenen Ausblasen des gereinigten Schweißbrenners S, um letzte ggf. noch im Schweißbrenner S enthaltene Rückstände zu entfernen.

### Bezugzeichenliste

- 1: Reinigungsstation
- 2: Ständer
- 3: Bodenplatte
- 4: Winkelstück
- 5: Vertikalstrebe
- 6: Befestigungsbohrung
- 7: Basis
- 8: Reinigungsdraht
- 9: Auffangbehältnis
- 10: Schneidvorrichtung
- 11: Schneidbacken
- 12: Auffangbehälter
- 13: Richtblech
- 14: Aussparung
- 15: Kontaktkante
- 16: Kontaktkante
- G: Gasdüse
- K: Kontaktspitze
- P: Pfeil
- S: Schweißbrenner

## Patentansprüche

1. Verfahren zum Reinigen von an Schweißrobotern angeordneten Schweißbrennern, insbesondere des Inneren von Gasdüsen von Lichtbogen-Schweißbrennern, **dadurch gekennzeichnet, dass** ein zu reinigender Schweißbrenner mit seiner offenen Schweißseite über das freie Ende eines zu einer Spirale aufgewundenen, einseitig auf einer Basis (7) ohne eigenen Aktuatorantrieb festgelegten Reinigungsdrahtes (8) geführt und relativ zu dem Reinigungsdraht (8) derart hin- und herbewegt wird, dass der rein passiv bewegte Reinigungsdraht (8) im Inneren an die Innenwand des Schweißbrenners, insbesondere der Gasdüse, anschlägt.

2. Verfahren nach Anspruch 1, **dadurch gekennzeichnet, dass** die Längsachse der Spirale des Reinigungsdrahtes (8) im Wesentlichen vertikal verläuft.

3. Verfahren nach einem der vorhergehenden Ansprüche, **dadurch gekennzeichnet, dass** Reinigungsrückstände in einem unterhalb der Basis (7) und unterhalb der Spirale angeordneten Auffangbehältnis (9) zum aufgefangen werden.

4. Verfahren nach einem der vorhergehenden Ansprüche, **gekennzeichnet durch** einen Reinigungsdraht (8) aus Federstahl.

5. Verfahren nach einem der vorhergehenden Ansprüche, **dadurch gekennzeichnet, dass** der Reinigungsdraht (8) in einer zylinderförmigen Spirale gewunden ist.

6. Verfahren nach einem der vorhergehenden Ansprüche, **dadurch gekennzeichnet, dass** über eine im Bereich des Reinigungsdrahtes (8) in einer Auslassdüse endende Druckgasleitung ein Druckgasfluss in einer Richtung mit wenigstens einer in Richtung des freien Endes der Spirale weisenden Richtungskomponente aufgebracht wird.

7. Reinigungsstation zum Reinigen von an Schweißrobotern angeordneten Schweißbrennern (S) nach dem Verfahren gemäß einem der vorhergehenden Ansprüche, insbesondere des Inneren von Gasdüsen (G) von Lichtbogen-Schweißbrennern, mit einem auf einer Basis (7) einseitig mit einem ersten Ende festgelegten, von der Basis (7) in Richtung eines freien Endes abstehenden, spiralförmig um eine Längsachse gewundenen Reinigungsdraht (8), wobei der Außendurchmesser der aus dem Reinigungsdraht (8) gebildeten Spirale derart bemessen ist, dass die Spirale mit der Seite des freien Endes des Reinigungsdrahtes (8) zumindest über einen Abschnitt ihrer Länge in einen Schweißbrenner (S), insbesondere in eine Gasdüse (G) eines Lichtbogen-Schweißbrenners eingeführt werden kann, **dadurch gekennzeichnet, dass** der Reinigungsdraht an der Basis ohne eigenen Aktuatorantrieb festgelegt ist und rein passiv, also allein betätigt über Bewegungen des Schweißbrenners (S), zu betreiben ist.

8. Reinigungsstation nach Anspruch 7, **gekennzeichnet durch** einen Ständer (2), der mit einem unteren Abschnitt (3) auf einem Untergrund ruht und an dem in einem oberen Abschnitt die Basis (7) mit dem daran festgelegten Reinigungsdraht (8) angeordnet ist.

9. Reinigungsstation nach einem der Ansprüche 7 oder 8, insbesondere nach Anspruch 8, **gekennzeichnet durch** eine neben dem Reinigungsdraht (8) angeordnete, insbesondere ebenfalls an dem Ständer (2) festgelegte, Schneidvorrichtung (10) zum Stutzen eines freien Endes eines in dem Schweißbrenner (S) geführten Schweißdrahtes.

10. Reinigungsstation nach einem der Ansprüche 7 bis 9, insbesondere nach Anspruch 8 oder 9, **gekennzeichnet durch** ein im Wesentlichen horizontal angeordnetes, aus einem elektrisch leitenden Material bestehendes, insbesondere an dem Ständer (2) angeordnetes, Richtblech (12) mit zwei senkrecht zueinander ausgerichteten Kontaktkanten (15, 16), gegen die der Schweißdraht eines Schweißbrenners (S) geführt werden kann.

## Claims

1. A method for cleaning welding torches mounted on welding robots, in particular the interior of gas nozzles of arc welding torches, **characterised in that** a welding torch to be cleaned is guided with its open welding side over the free end of cleaning wire (8), wound into a coil, on one side on a base (7) without its own actuating drive and is then moved back and forth with respect to the cleaning wire (8), that the cleaning wire, moved purely passively, abuts in the inside section against the inner wall of the welding torch, in particular the gas nozzle.

2. The method according to claim 1, **characterised in that** the longitudinal axis of the coil of the cleaning wire (8) extends essentially vertically.

3. The method according to any of the preceding claims, **characterised in that** cleaning residues are collected in a collection container (9) below the base (7) and below the coil.

4. The method according to any of the preceding claims, **characterised by** a cleaning wire (8) made of spring steel.

5. The method according to any of the preceding claims, **characterised in that** the cleaning wire (8) is wound into a cylindrical coil.

6. The method according to any of the preceding claims, **characterised in that** a flow of compressed gas is applied into a direction with at least one direction component pointing into a direction of the free end of the coil, over a compressed gas line terminating in the region of the cleaning wire (8) in an outlet nozzle (8).

7. A cleaning station for cleaning welding torches (S) arranged on welding robots according to the method of any of the preceding claims, in particular the inside of gas nozzles (G) of arc welding torches, with a cleaning wire (8) wound around a longitudinal axis in the form of a coil, delineated on one side by a first end, protruding from the base (7) in the direction of a free end, whereas the outer diameter of the coil formed by the cleaning wire (8) is designed in such a way that the coil can be guided, with the side of the free end of the cleaning wire (8), at least over a section of its length into a welding torch (S), in particular into a gas nozzle (G) of an arc welding torch, **characterised in that** the cleaning wire is delineated on the base without its own actuating drive and can be driven purely passively, i.e. only actuated by the movements of the welding torch (S).

8. The cleaning station according to claim 7, **characterised by** a stand (2) which rests on an undersurface with a lower section (3) and on which is arranged in an upper section, the base (7) with a cleaning wire (8) delineated thereon.

9. The cleaning station according to any of the claims 7 or 8, in particular according to claim 8, **characterised by** a cutting device (10) arranged close to the cleaning wire (8), provided in particular on the stand (2), to support a free end of a welding wire guided in the welding torch (S).

10. The cleaning station according to any of the claims 7 to 9, in particular according to claim 8 or 9, **characterised by** a guiding sheet (12), arranged essentially horizontally, consisting of an electrically conducting material, in particular on the stand (12), with two contact edges (15, 16) arranged perpendicular to each other, against which the welding wire of a welding torch (S) can be guided.

## Revendications

1. Procédé de nettoyage de torches de soudage montées sur des robots de soudage, en particulier l'intérieur de buses à gaz de torches de soudage à l'arc, **caractérisé en ce qu'**une torche de soudage à nettoyer est guidée avec son côté ouvert de soudage au-dessus de l'extrémité libre du fil de nettoyage (8) enroulé en une bobine, d'un côté sur une base (7) sans son propre entraînement d'actionnement et est ensuite déplacé d'avant en arrière par rapport au fil de nettoyage (8), **en ce que** le fil de nettoyage, déplacé de manière purement passive, vient en butée dans la partie intérieure contre la paroi interne de la torche de soudage, en particulier la buse de gaz.

2. Procédé selon la revendication 1, **caractérisé en ce que** l'axe longitudinal de la bobine du fil de nettoyage (8) s'étend sensiblement à la verticale.

3. Procédé selon l'une quelconque des revendications précédentes, **caractérisé en ce que** les résidus de nettoyage sont collectés dans un conteneur de récupération (9) au-dessous de la base (7) et au-dessous de la bobine.

4. Procédé selon l'une quelconque des revendications précédentes, **caractérisé par** un fil de nettoyage (8) en acier à ressort.

5. Procédé selon l'une quelconque des revendications précédentes, **caractérisé en ce que** le fil de nettoyage (8) est enroulé en une bobine cylindrique.

6. Procédé selon l'une quelconque des revendications précédentes, **caractérisé en ce qu'**un écoulement de gaz comprimé est appliqué dans une direction ayant au moins une composante directionnelle pointant en direction de l'extrémité libre de la bobine, sur une conduite de gaz comprimé débouchant dans la zone du fil de nettoyage (8) dans une buse de sortie (8).

7. Station de nettoyage pour le nettoyage de torches de soudage (S) disposées sur des robots de soudage selon le procédé selon l'une quelconque des revendications précédentes, en particulier à l'intérieur des buses de gaz (G) de torches de soudage à l'arc, avec un fil de nettoyage (8) enroulé autour d'un axe longitudinal, sous forme d'une bobine, délimitée d'un côté par une première extrémité, faisant saillie à partir de la base (7) dans la direction d'une extrémité libre, tandis que le diamètre extérieur de la bobine formé par le fil de nettoyage (8) est conçu de telle manière que la bobine peut être guidée, avec le côté de l'extrémité libre du fil de nettoyage (8), au moins sur une partie de sa longueur dans une torche de soudage (S), en particulier une buse de gaz (G) d'une torche de soudage à l'arc, **caractérisé en ce que** le fil de nettoyage est délimité sur la base sans son propre mécanisme de commande et peut être entraîné de manière purement passive, c'est-à-dire uniquement actionné par les mouvements de la torche de soudage (S).

8. Station de nettoyage selon la revendication 7, **caractérisé par** un support (2) qui repose sur une surface inférieure avec une section inférieure (3) et sur lequel est disposée dans une partie supérieure, la base (7) avec un fil de nettoyage (8) délimité sur celle-ci.

9. Station de nettoyage selon l'une quelconque des revendications 7 ou 8, notamment selon la revendication 8, **caractérisé par** un dispositif de coupe (10) disposé à proximité du fil de nettoyage (8), prévu en particulier sur le support (2) pour supporter une extrémité libre d'un fil de soudage guidé dans la torche de soudage (S).

10. Station de nettoyage selon l'une quelconque des revendications 7 à 9, notamment selon la revendication 8 ou 9, **caractérisé par** une tôle de guidage (12), disposée sensiblement à l'horizontale, constituée d'un matériau électriquement conducteur, en particulier sur le support (12), avec deux bords de contact (15, 16) disposées perpendiculairement l'un de l'autre, contre lesquels le fil de soudage d'une torche de soudage (S) peut être guidé.
